# FASCICULE DE BREVET EUROPEEN

(11) **EP 0 925 701 B1**
(45) Date de publication et mention de la délivrance du brevet: **21.09.2005**
(21) Numéro de dépôt: 98917189.7
(22) Date de dépôt: 20.03.1998
(51) Int. Cl.: H04Q 7/32

(54) **PROCEDE D'ENREGISTREMENT D'AU MOINS UNE STATION MOBILE BIMODE AUPRES D'UNE STATION DE BASE DOMESTIQUE ASSOCIEE**
VERFAHREN ZUR REGISTRIERUNG VON MINDESTENS EINEM TRAGBAREN DUALMODE-TELEFONGERÄT BEI EINER ZUGEHÖRIGEN, SCHNURLOSEN BASISSTATION
METHOD FOR REGISTERING AT LEAST ONE DUAL-MODE MOBILE STATION IN AN ASSOCIATED DOMESTIC BASE STATION

(30) Priorité: 20.03.1997 FR 9703414
(43) Date de publication de la demande: 30.06.1999
(73) Titulaire: ALCATEL, 75008 Paris (FR)
(72) Inventeur: BURSZTEJN, Jacques, F-92200 Neuilly sur Seine (FR); HAVET, Maure, F-75015 Paris (FR); KUMAR, Vinod, F-75005 Paris (FR)
(74) Mandataire: Lamoureux, Bernard
(86) Numéro de dépôt international: PCT/FR1998/000559
(87) Numéro de publication internationale: WO 1998/043457

(56) Documents cités:
- EP-A- 0 656 735
- EP-A- 0 700 227
- FR-A- 2 687 874

## Description

Le domaine de l'invention est celui des systèmes de radiocommunication.

Plus précisément, l'invention concerne un procédé d'enregistrement d'au moins une station mobile bimode (c'est-à-dire possédant deux modes de fonctionnement : "sans fil" et "cellulaire") auprès d'une station de base domestique associée, cette station de base constituant avec la station mobile bimode un système de radiocommunication sans fil.

Il convient tout d'abord de rappeler qu'il existe deux grandes familles de systèmes de radiocommunication : les systèmes sans fil et les systèmes cellulaires.

De façon classique, un système sans fil (par exemple de type CT2 ou DECT) comprend une station de base domestique à laquelle sont associées une ou plusieurs stations mobiles. On connaît de nombreuses applications d'un tel système sans fil.

Ainsi, dans une première application, la station de base domestique est placée dans une habitation, l'usager et sa famille disposant d'une ou plusieurs stations mobiles fonctionnant avec la station de base domestique. Dans ce cas, la station de base domestique est aussi appelée station de base privée ou individuelle, et les stations mobiles sont aussi appelées combinés ou terminaux portatifs.

Dans une seconde application, la station de base domestique est placée dans les locaux d'une entreprise, plusieurs employés disposent chacun d'une station mobile fonctionnant avec la station de base domestique. Dans ce cas, la station de base domestique est aussi appelée station de base d'entreprise ou de bureau.

La station de base domestique est reliée au réseau téléphonique public. Ainsi chaque station mobile communique avec le réseau public via la station de base domestique qui lui est associée. La station de base domestique n'assure qu'une couverture locale, correspondant approximativement à la surface d'un appartement, d'une maison et d'un jardin, ou encore des locaux d'une entreprise.

En revanche, les systèmes cellulaires (par exemple de type GSM 900 ou DCS 1800) sont conçus pour assurer une couverture beaucoup plus large, correspondant par exemple à un pays, voire un continent. D'une façon générale, un système de radiocommunication cellulaire est mis en oeuvre au sein d'un réseau de cellules géographiques. Une station de base (parfois appelée station de base cellulaire dans la suite de la description) est associée à chaque cellule. Chaque usager dispose d'une station mobile (également appelé terminal portatif), lui permettant de communiquer par l'intermédiaire de la station de base associée à la cellule dans laquelle il se trouve.

Pendant très longtemps, les systèmes sans fil et cellulaire ont été développés indépendamment l'un de l'autre, d'où la conception de deux types de stations de base, à savoir celles utilisables uniquement dans un système cellulaire et celles utilisables uniquement dans un système sans fil.

Depuis quelques temps, on cherche à intégrer dans une même station mobile, dite station mobile bimode, les deux types de fonctionnement "sans fil" et "cellulaire". En effet, du fait de sa complexité, un système cellulaire est d'utilisation beaucoup plus coûteuse pour l'usager qu'un système sans fil. En d'autres termes, les abonnements et les communications sont facturés plus chers dans un système cellulaire que dans un système sans fil (les tarifs appliqués dans le cas d'un système sans fil étant ceux du réseau plublic auquel est reliée la station de base domestique). On cherche donc à permettre à l'usager d'utiliser sa station mobile aussi souvent que possible dans le mode "sans fil" (c'est-à-dire dès qu'il se trouve sous couverture locale de la station de base domestique), le mode "cellulaire" n'étant utilisé que lorsque le fonctionnement selon le mode "sans fil" n'est pas possible.

La première solution connue, qui est la plus simple à réaliser, consiste à juxtaposer dans un même boîtier les moyens constitutifs d'une station mobile de type "sans fil" et ceux constitutifs d'une station mobile de type "cellulaire".

Comme on le comprendra aisément, cette première solution est très coûteuse puisque le prix d'une station mobile bimode ainsi réalisée correspond sensiblement à la somme du prix d'une station mobile de type "sans fil" et à celui d'une station mobile de type "cellulaire".

Une seconde solution connue, qui est plus avantageuse, a récemment été proposée. Elle consiste à concevoir une station de base domestique compatible, en termes de bande de fréquence, avec le système cellulaire utilisé dans le mode "cellulaire". En d'autres termes, la station de base domestique émet et reçoit sur des fréquences comprises dans la même bande de fréquence que les fréquences émises et reçues par les stations de bases du système cellulaire. On présente ci-dessous brièvement le fonctionnement de la station de base domestique et de la station mobile bimode dans ce cas.

En mode veille (c'est-à-dire tant que la station mobile bimode ne s'est pas enregistrée ou après que la station mobile bimode se soit enregistrée), la station de base domestique émet sur un canal de balise (beacon channel) pour révéler à la station mobile bimode sa présence.

De son côté, la station mobile bimode, lorsqu'elle est en veille dans le mode "cellulaire", écoute périodiquement le canal balise de sa station de base domestique associée. Quand la station mobile bimode passe sous couverture locale de la station de base domestique, elle reconnaît le canal de balise et s'enregistre alors auprès de la station de base domestique. Suite à cet enregistrement, la station mobile bimode fonctionne en mode "sans fil" et peut être utilisée pour émettre (respectivement recevoir) des appels directement en direction (respectivement en provenance) du réseau public, indépendamment du réseau cellulaire.

Il est important de noter que l'enregistrement de la station mobile bimode auprès de la station de base domestique constitue une phase, exécutée une fois pour toute, préalable au fonctionnement en mode "sans fil". Le fonctionnement proprement dit en mode "sans fil" consiste en revanche à effectuer successivement dans le temps plusieurs phases d'établissement d'appel (entrant ou sortant) suivies chacune (sauf en cas de problème) d'une phase de communication. En d'autres termes, dès lors que la station mobile bimode s'est enregistrée, plusieurs appels successifs peuvent être traités et plusieurs communications peuvent être établies, sans que cela nécessite un nouvel enregistrement à chaque fois.

En mode actif, après que la station mobile bimode s'est enregistrée auprès d'elle, la station de base domestique continue d'émettre sur le canal de balise, de façon à prévenir la station mobile bimode qu'un appel lui est destiné (appel rentrant) ou qu'une demande d'accès préalablement émise par la station mobile bimode (appel sortant) est acceptée.

Il est clair qu'avec cette solution connue, le coût de la station mobile bimode est fortement réduit par rapport à la première solution puisqu'on utilise les mêmes moyens matériels dans les deux modes "sans fil" et "cellulaire".

En contrepartie, avec cette seconde solution connue, du fait de l'utilisation simultanée d'une même bande de fréquence, il existe un risque d'interférences d'une part entre les différentes stations de base domestiques et d'autre part entre les stations de base domestiques et les stations de base cellulaires.

Afin de réduire ce risque, il a été proposé que le canal balise soit réduit à un signal émis par intermittence, avec un faible cycle opératoire (c'est-à-dire à intervalles de temps relativement éloignés).

Malheureusement, cette proposition n'est pas optimale en termes d'interférences. En effet, même si le canal balise est émis avec un faible cycle opératoire, il constitue néanmoins une source d'interférence avec toutes les autres stations de base (domestiques ou cellulaires) utilisant le même canal balise. Il convient alors de prévoir une coordination en termes de fréquences et de couverture géographique, ce qui mène à des procédures d'achat et d'installation très complexes.

Un autre exemple de l'état de l'art est décrit dans le document EP-A-0 656 735.

L'invention a notamment pour objectif de pallier ces différents inconvénients de l'état de la technique.

Plus précisément, l'un des objectifs de la présente invention est de fournir un procédé d'enregistrement d'une station mobile bimode auprès d'une station de base domestique, qui permette de minimiser les risques d'interférences d'une part entre les différentes stations de base domestiques et d'autre part entre les stations de base domestiques et les stations de base cellulaires.

L'invention a également pour objectif de fournir un tel procédé dont la mise en oeuvre nécessite peu de modifications dans la station mobile bimode par rapport aux stations cellulaires existantes correspondantes.

Ces différents objectifs, ainsi que d'autres qui apparaîtront par la suite, sont atteints selon l'invention à l'aide d'un procédé d'enregistrement d'au moins une station mobile bimode auprès d'une station de base domestique associée, ladite station de base domestique étant reliée au réseau téléphonique public et utilisant en émission et en réception des fréquences proches ou identiques à celles d'un système de radiocommunication cellulaire, ladite station mobile bimode pouvant fonctionner soit dans un mode "sans fil", soit dans un mode "cellulaire",
ledit procédé consitant en un échange de signaux selon un protocole prédéterminé basé sur, d'une part, une loi de sauts de fréquence prédéterminée, permettant de déterminer sur quelle fréquence doit être émis chaque signal et, d'autre part, une fréquence de départ de voie montante prédéterminée, sur laquelle la station mobile bimode émet le premier signal, ladite loi de sauts de fréquence de départ de voie montante étant spécifiques à, et connues de, la station mobile bimode et la station de base domestique associée,
ledit procédé étant caractérisé en ce qu'il comprend une phase de contact initial comprenant elle-même les étapes suivantes :
- la station mobile bimode émet un burst de contact, constitué d'une sinusoïde pure à ladite fréquence de départ de voie montante ;
- la station de base domestique, qui est en mode réception sur ladite fréquence de départ de voie montante, reçoit le burst de contact, puis répond en émettant un burst d'accudé de réception, constitué d'une sinusoïde pure à une fréquence de départ de voie descendante associée à ladite fréquence de départ de voie montante ;
- la station mobile bimode reçoit le burst d'accusé de réception; et une phase de synchronisation temporelle entre la station mobile bimode et la station de base domestique.

Le principe général de l'invention consiste donc à appairer une station mobile bimode et une station de base domestique en les faisant fonctionner selon un protocole d'échange de signaux basé sur une même loi de sauts de fréquence et une même fréquence de départ de voie montante, de façon qu'en fonction de la fréquence précédemment émise ou reçue, chacune des deux stations (de base domestique ou mobile bimode) sache si elle doit émettre ou recevoir, et ce sur quelle fréquence.

Ainsi, grâce aux sauts de fréquence, on minimise les risques d'interférences avec d'autres stations de bases (domestiques ou cellulaires) pendant la phase d'enregistrement.

De plus, comme les éléments essentiels du protocole (à savoir la loi de sauts et la fréquence de départ de voie montante) sont spécifiques au couple (station de base domestique, station mobile bimode), la durée de la phase d'enregistrement peut être très courte.

Par ailleurs, il est important de noter que, selon l'invention, c'est toujours la station mobile bimode qui commence l'échange de signaux. Par conséquent, en mode veille, la station de base domestique n'émet aucun signal (elle est à l'écoute de la fréquence de départ de voie montante), ce qui permet d'éviter toutes interférences avec d'autres stations de bases (domestiques ou cellulaires).

De façon avantageuse, la station mobile bimode émet le premier signal à la fréquence de départ de voie montante après que l'utilisateur a indiqué qu'il souhaitait l'enregistrement de la station mobile bimode auprès de la station de base domestique.

Ainsi, c'est l'utilisateur lui-même qui décide d'enregistrer sa station mobile bimode auprès de la station de base domestique. Comme expliqué ci-dessus, ceci évite à la station de base domestique d'avoir à émettre un signal de type balise dans le but d'indiquer sa présence à la station mobile bimode.

Avantageusement, la station de base domestique est indépendante du système de radiocommunication cellulaire, la station mobile bimode étant accessible :
- dans le mode "sans fil", par un premier numéro associé à la station de base domestique dans le réseau téléphonique public, et
- dans le mode "cellulaire", par un second numéro, qui est distinct dudit premier numéro et associé, dans le système de radiocommunication cellulaire, à un module d'identification d'abonné inséré dans la station mobile bimode.

En d'autres termes, on ne cherche pas ici à conserver un même numéro pour les deux modes "sans fil" et "cellulaire". Il est important de noter que, selon l'invention, le fonctionnement en mode "sans fil" se fait complètement indépendamment du système cellulaire (tant pour la prise de contact (avec synchronisation) que pour l'établissement d'appel).

D'une façon générale (et notamment dans le cas du GSM), le numéro cellulaire de l'abonné est stocké dans une carte (par exemple une carte à puce) stockant des données spécifiques à l'abonné. Cette carte, qui est appelée module d'identification d'abonné (ou carte SIM) dans le GSM, est destinée à être insérée dans n'importe quel station mobile, et donc notamment dans la station mobile bimode. En revanche, le numéro public de l'abonné est toujours associé à une connexion téléphonique particulière, sur laquelle est connectée la station de base domestique.

Préférentiellement, les fréquences émises par la station mobile bimode et la station de base domestique selon ladite loi de sauts de fréquences prédéterminée sont des fréquences également utilisées par la station mobile bimode et les stations de base du système cellulaire dans le mode "cellulaire",
chaque fréquence émise par la station mobile bimode, dite fréquence de voie montante, étant associée à une fréquence émise par la station de base domestique, dite fréquence de voie descendante, de façon à constituer un des canaux bidirectionnels utilisés par la station mobile bimode et la station de base domestique selon ladite loi de sauts de fréquence prédéterminée.

En d'autres termes, la loi de sauts permet de passer d'un canal bidirectionnel à un autre, chaque canal comprenant une voie montante (station mobile bimode vers station de base domestique) et une voie descendante (station de base domestique vers station mobile bimode). Ainsi, on reprend la structure classique en canaux des systèmes cellulaires (notamment de type GSM), ce qui évite des modifications matérielles de la station mobile bimode par rapport aux stations mobiles classiques (uniquement cellulaires).

De façon préférentielle, ladite loi de sauts de fréquences prédéterminée appartient au groupe comprenant :
- les lois de sauts classiquement utilisées en radiocommunication cellulaire ;
- les lois de sauts pseudo-aléatoires ;
- les lois de sauts minimisant la probabilité d'interférence entre système cellulaire et système sans fil.

Dans un mode de réalisation avantageux de l'invention, au moins deux stations mobiles bimode sont associées à ladite station de base domestique, la station de base domestique et toutes les stations mobiles bimode utilisent une même fréquence de départ de voie montante prédéterminée, et chaque couple distinct (station de base domestique, station mobile bimode) utilise une loi de sauts de fréquence prédéterminée distincte.

De cette façon, tous les avantages précités s'appliquent aussi au cas d'une station de base domestique associée à plusieurs stations mobiles bimode.

Ce mode de réalisation à plusieurs stations mobiles bimode (fonctionnant avec une même station de base domestique) correspond notamment à une installation en site professionnel, où plusieurs employés possèdent une station mobile bimode leur permettant d'être reliés à la station de base domestique de l'entreprise.

De façon préférentielle, lorsque ledit système de radiocommunication est du type à accès multiple à répartition dans le temps, les signaux échangés étant structurés en trames successives contenant chacune un nombre prédéterminé d'intervalles de temps, ladite structure en trame est conservée, chaque station mobile bimode se voyant affecter un rang particulier d'intervalle de temps dans chaque trame.

Dans un mode de réalisation particulier de l'invention, ledit procédé comprend les phases successives suivantes :
- une phase de contact initial, au cours de laquelle la station de base domestique et la station mobile bimode s'assurent qu'elles peuvent se joindre ;
- une phase de synchronisation temporelle, au cours de laquelle la station mobile bimode se synchronise temporellement par rapport à la station de base domestique;
- une phase de veille, au cours de laquelle :
   * la station de base domestique et la station mobile bimode s'assurent que leur synchronisation temporelle mutuelle est conservée ;
   * lors d'un appel sortant, la station mobile bimode émet vers la station de base domestique un signal d'accès en vue d'établir un appel ;
   * lors d'un appel entrant, la station de base domestique émet vers la station mobile bimode un message de paging en vue d'établir un appel.

On notera que dans ce mode de réalisation particulier, la station mobile bimode et la station de base domestique se synchronisent mutuellement, et ce complètement indépendamment du système cellulaire.

D'autres caractéristiques et avantages de l'invention apparaîtront à la lecture de la description suivante d'un mode de réalisation préférentiel de l'invention, donné à titre d'exemple indicatif et non limitatif, et des dessins annexés, dans lesquels :
- la figure 1 présente de façon schématique une station mobile bimode et sa station de base domestique associée, dans lesquelles peut être mis en oeuvre le procédé d'enregistrement selon l'invention ;
- la figure 2 présente un organigramme simplifié d'un mode de réalisation particulier du procédé selon l'invention ; et
- la figure 3 présente un exemple d'échange de signaux entre la station mobile bimode et la station de base domestique lorsque le procédé de l'invention est mis en oeuvre selon l'organigramme de la figure 2.

L'invention concerne donc un procédé d'enregistrement d'une ou plusieurs stations mobiles bimode auprès d'une station de base domestique associée.

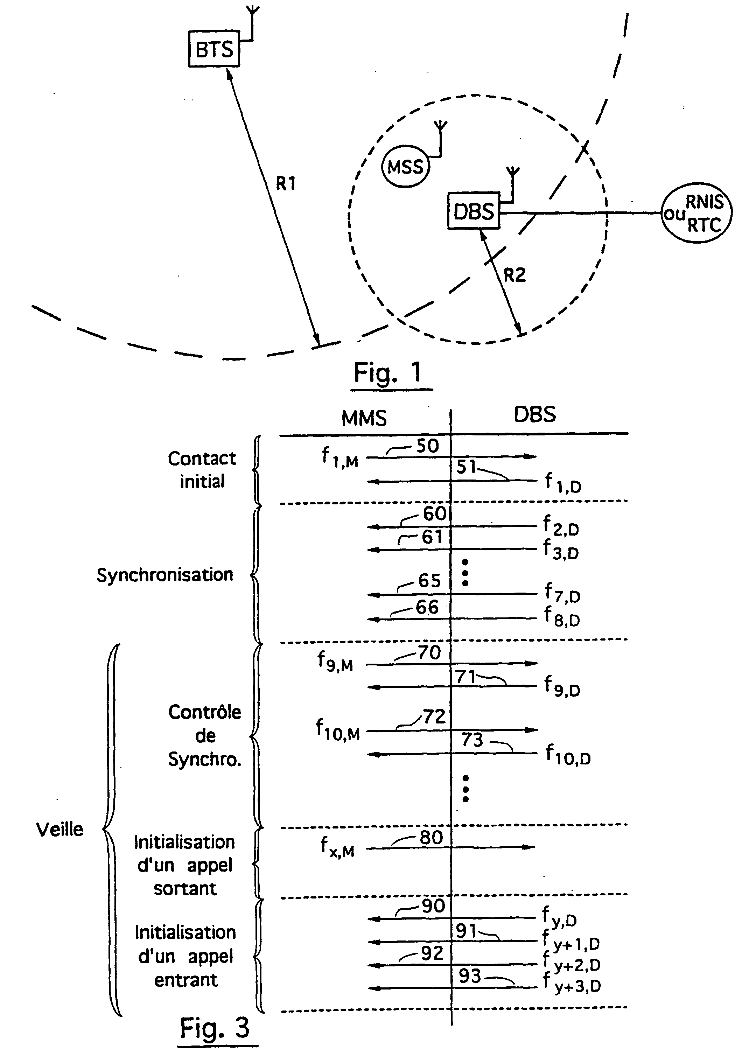

De façon classique, comme présenté schématiquement sur la figure 1, une station mobile bimode MMS peut fonctionner soit dans un mode "sans fil", dans lequel elle communique via sa station de base domestique associée DBS, soit dans un mode "cellulaire", dans lequel elle communique via une des stations de base BTS d'un système de radiocommunication cellulaire (par exemple un système de type GSM 900 ou DCS 1800).

Il est clair que les échelles ne sont pas respectées sur la figure 1, le rayon R1 de la zone couverte par une station de base cellulaire BTS (c'est-à-dire le rayon R1 d'une cellule du système cellulaire) étant généralement beaucoup plus grand que le rayon R2 de la zone couverte par la station de base domestique DBS.

Dans le cadre de l'invention, la station de base domestique DBS est reliée uniquement au réseau téléphonique public (RTC ou RNIS par exemple). Elle utilise en émission et en réception des fréquences identiques à celles utilisées par le système de radiocommunication cellulaire, de façon à réduire au minimum les modifications matérielles et logicielles à apporter à la station mobile bimode MMS, par rapport à une station mobile classique (mode "cellulaire" uniquement).

Lorsque la station mobile bimode MMS fonctionne dans le mode "sans fil", il existe deux phases, qui peuvent être effectuées successivement autant de fois que nécessaire, à savoir :
- une phase d'établissement d'appel, effectuée à chaque fois qu'un appel est lancé soit par la station mobile bimode MMS (appel sortant), soit par la station de base domestique DBS (appel entrant) ;
- une phase de communication, qui fait suite à l'exécution d'une phase d'établissement d'appel et permet un échange de paroles ou de données entre la station mobile bimode MMS et un autre équipement téléphonique (non représenté), via la station de base domestique DBS.

On notera que cet autre équipement téléphonique peut être soit une autre station mobile (monomode ou bimode) également associée à la station de base domestique DBS, soit un poste quelconque relié à la station de base domestique DBS via le réseau téléphonique public.

La présente invention concerne une phase préalable au fonctionnement dans le mode "sans fil" (c'est-à-dire préalable aux phases d'établissement d'appel et aux phases de communication successives). Plus précisément, la présente invention concerne le procédé d'enregistrement de la station mobile bimode MMS auprès de la station de base domestique DBS.

Ce procédé d'enregistrement a notamment pour but d'une part de faire savoir à la station de base domestique DBS que la station mobile bimode MMS est sous sa couverture, et d'autre part de synchroniser la station de base domestique DBS et la station mobile bimode MMS l'une par rapport à l'autre.

Selon l'invention, le procédé d'enregistrement consiste en un échange de signaux selon un protocole prédéterminé basé sur deux éléments connus de la station de base domestique DBS et de la station mobile bimode MMS, et qui leur sont spécifiques, à savoir :
- une loi de sauts de fréquence prédéterminée, permettant de déterminer sur quelle fréquence doit être émis chaque signal, et
- une fréquence de départ de voie montante prédéterminée, sur laquelle la station mobile bimode MMS émet le premier signal.

Par éléments spécifiques aux stations MMS et DBS, on entend le fait que ces éléments sont stockés soit physiquement par ces stations (dans une mémoire celles-ci), soit via une carte (par exemple une carte SIM) insérée dans ces stations. On peut bien sûr envisager une combinaison de ces deux méthodes de stockage : la station de base domestique stockant physiquement les éléments (loi de sauts et fréquence de départ) tandis que la station mobile bimode les stocke via la carte SIM avec laquelle elle coopère.

Il est important de noter que la loi de sauts de fréquence et la fréquence de départ de voie montante sont spécifiques à ce couple (station mobile bimode MMS, station de base domestique DBS). En d'autres termes, les deux stations MMS, DBS sont appairées et ne peuvent fonctionner qu'ensemble.

Elles sont par exemple prévues pour être vendues ensemble, si le choix et le stockage de la loi de sauts de fréquence et la fréquence de départ de voie montante sont effectués en usine.

Cependant, selon une variante, on peut prévoir que la loi de sauts de fréquence et la fréquence de départ de voie montante sont stockées dans une carte SIM, cette carte étant dupliquée et insérée dans chacune des stations MMS et DBS.

Selon encore une autre variante, on peut prévoir que les deux stations MMS, DBS puissent être achetées séparément, le choix et le stockage de la loi de sauts de fréquence et la fréquence de départ de voie montante étant dans ce cas effectués lors de la première utilisation en commun (avec par exemple un calcul des paramètres dans l'une des deux stations, puis le transfert via des plots de charge des paramètres calculés).

La fréquence de départ de voie montante et les fréquences suivantes (déterminées selon la loi de sauts de fréquence) peuvent être des fréquences également utilisées par la station mobile bimode MMS dans le mode "cellulaire".

La loi de sauts de fréquences prédéterminée, spécifique au couple (station mobile bimode MMS, station de base domestique DBS), est par exemple une loi de sauts classiquement utilisée en radiocommunication cellulaire. Il est clair cependant que de nombreux autres lois de sauts peuvent être envisagées, tels que notamment les lois de sauts pseudo-aléatoires, ou encore les lois de sauts conçues spécialement dans le but de minimiser la probabilité d'interférence entre systèmes cellulaires et systèmes sans fil. Il s'agit notamment :
- des interférences entre stations de base domestiques DBS, et/ou
- des interférences entre stations de base domestique DBS et stations de base cellulaires BTS, et/ou
- des interférences entre stations mobiles bimode et stations de base domestique DBS, et/ou
- des interférences entre stations mobiles bimode et stations de base cellulaires.

Le concept de l'invention englobe également le cas où plusieurs stations mobiles bimodes MMS sont associées à une même station de base domestique DBS. En effet, dans ce cas, la fréquence de départ de voie montante est partagée par toutes les stations mobiles bimodes MMS, mais en revanche chaque couple (station mobile bimode MMS, station de base domestique DBS) utilise sa propre loi de sauts de fréquence.

Il est également important de noter que c'est toujours la station mobile bimode MMS qui émet le premier signal, sur la fréquence de départ de voie montante. Ainsi, la station de base domestique DBS peut rester en écoute sur cette fréquence de départ de voie montante, sans émettre aucune fréquence, ce qui permet d'éviter toute interférence avec d'autres stations de base domestiques DBS ou avec des stations de base cellulaires BTS.

On peut prévoir que l'émission par la station mobile bimode MMS du premier signal est déclenchée par l'utilisateur lui-même, par exemple en appuyant sur un bouton d'enregistrement prévu à cet effet sur la station mobile bimode MMS. Dans ce cas, dès qu'il se trouve dans la zone couverte par sa station de base domestique DBS (c'est-à-dire dès qu'il arrive chez lui), l'utilisateur déclenche l'enregistrement de sa station mobile bimode MMS auprès de sa station de base domestique DBS.

Selon une variante, la station mobile bimode MMS déclenche automatiquement l'émission du premier signal, sur la fréquence de départ de voie montante, en fonction de critères prédéterminés (par exemple lorsque la couverture cellulaire n'est plus assurée, ce qui peut signifier que l'utilisateur vient de rentrer dans appartement qui est peut-être le sien ; ou encore lorsque la station mobile bimode MMS est posée sur un support particulier).

Dès que la procédure d'enregistrement est terminée, la station mobile bimode MMS fonctionne en mode "sans fil" et reçoit ou émet des appels via la station de base domestique DBS et non plus via le système cellulaire, bénéficiant ainsi des tarifs plus avantageux du réseau téléphonique public.

Dans un mode de réalisation particulier, la station de base domestique DBS est indépendante du système de radiocommunication cellulaire. Par conséquent, le numéro cellulaire de l'abonné (qui est stocké dans la carte SIM insérée dans la station mobile bimode MMS) est différent du numéro public affecté à la station de base domestique DBS. Par numéro public, on entend ici le numéro affecté à la station de base domestique dans le réseau téléphonique public commuté (RTC) ou le réseau RNIS. Dans le mode "cellulaire", la station mobile bimode MMS reçoit les appels (sur le numéro cellulaire) à travers le réseau cellulaire. Dans le mode "sans fil", la station mobile bimode MMS est alertée à travers la station de base domestique (si elle s'est préalablement enregistrée auprès de celle-ci) quand la station de base domestique DBS reçoit un appel sur le numéro public.

La présente invention peut également s'appliquer dans le cas où le numéro cellulaire de l'abonné est identique au numéro public de la station de base domestique DBS. Il convient toutefois dans ce cas de prévoir des moyens de personnalisation de la station de base domestique DBS (par exemple en mettant la station mobile bimode MMS dans un support particulier ou en insérant une seconde carte SIM dans la station de base domestique DBS). Les techniques de routage d'appel avec un même numéro pour le système sans fil et le système cellulaire ne sont pas directement concernées par la présente invention.

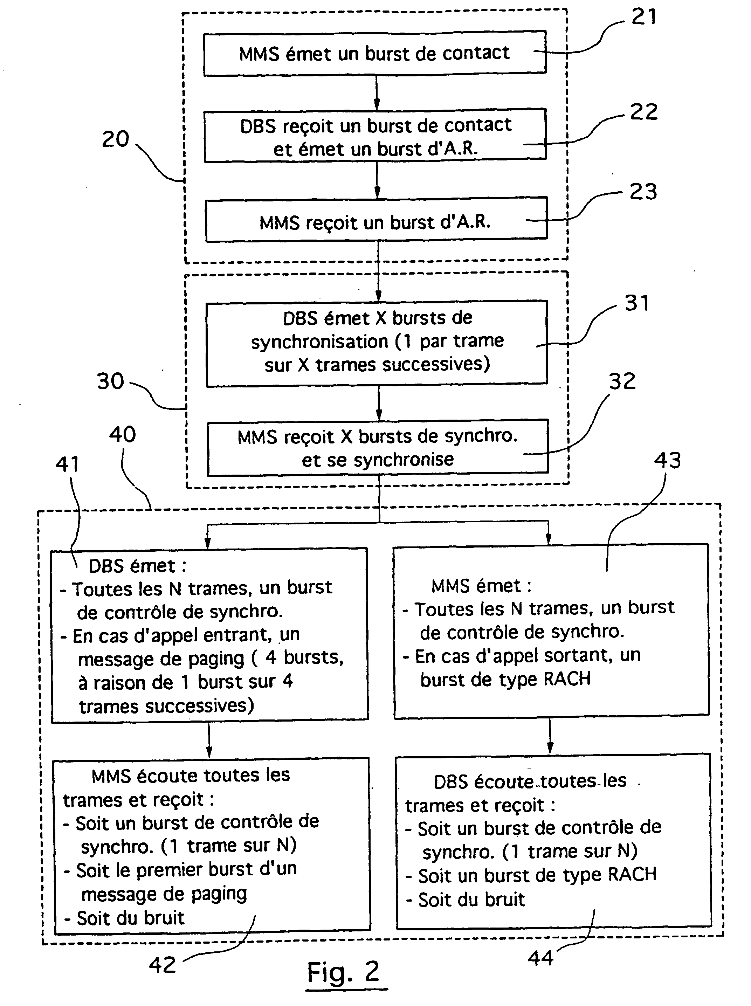

On présente maintenant, en relation avec les figures 2 et 3, un mode de réalisation particulier du procédé selon l'invention d'enregistrement de la station mobile bimode MMS auprès de la station de base domestique DBS.

On suppose dans cet exemple que le système de radiocommunication est du type à accès multiple à répartition dans le temps (AMRT), les signaux échangés étant structurés en trames successives contenant chacune un nombre prédéterminé d'intervalles de temps. C'est par exemple le cas d'un système de type GSM, dans lequel chaque trame comprend 8 intervalles de temps.

Cette structure en trames est conservée pour le système "sans fil", c'est-à-dire pour les échanges de signaux entre la station mobile bimode MMS et la station de base domestique DBS. Ainsi, chaque station mobile bimode MMS se voit affecter un rang particulier d'intervalle de temps dans chaque trame. En conséquence, si une trame comprend huit intervalles de temps (cas du GSM), huit stations mobiles bimode MMS au maximum peuvent être enregistrées et fonctionner avec une même station de base domestique DBS.

Comme présenté sur l'organigramme de la figure 2, dans un mode de réalisation particulier, le procédé de l'invention comprend les phases successives suivantes :
- une phase de contact initial (20), au cours de laquelle la station de base domestique DBS et la station mobile bimode MMS s'assurent qu'elles peuvent se joindre ;
- une phase de synchronisation temporelle (30), au cours de laquelle la station mobile bimode MMS se synchronise temporellement par rapport à la station de base domestique DBS ;
- une phase de veille (40), au cours de laquelle :
   * la station de base domestique DBS et la station mobile bimode MMS s'assurent que leur synchronisation temporelle mutuelle est conservée ;
   * lors d'un appel sortant, la station mobile bimode MMS émet vers la station de base domestique DBS un signal d'accès en vue d'établir un appel ;
   * lors d'un appel entrant, la station de base domestique DBS émet vers la station mobile bimode MMS un message de paging en vue d'établir un appel.

On présente maintenant plus en détail chacune de ces phases, en faisant référence à la figure 3, qui présente un exemple d'échange de signaux entre la station mobile bimode et la station de base domestique lorsque le procédé de l'invention est mis en oeuvre selon l'organigramme de la figure 2. Sur cette figure 3, chaque burst est représenté par une flèche, et la fréquence sur laquelle est émise ce burst est précisée.

La phase de contact initial (20) comprend les étapes suivantes :
- étape 21 : la station mobile bimode MMS émet un burst de contact 50, d'une durée sensiblement égale à celle d'un intervalle de temps, et constitué d'une sinusoïde pure à la fréquence de départ de voie montante f_{1,M} ;
- étape 22 : la station de base domestique DBS, qui est en mode réception continue sur la fréquence de départ de voie montante f_{1,M}, reçoit le burst de contact 50, puis répond en émettant un burst d'accusé de réception 51, d'une durée sensiblement égale à celle d'un intervalle de temps, et constitué d'une sinusoïde pure à la fréquence de départ de voie descendante f_{1,D} associée à la fréquence de départ de voie montante f_{1,M} ;
- étape 23 : la station mobile bimode MMS reçoit le burst d'accusé de réception 51.

La phase de synchronisation temporelle (30), effectuée si la phase de contact initial (20) s'est déroulée correctement, comprend les étapes suivantes :
- étape 31 : la station de base domestique DBS émet X bursts de synchronisation 60 à 66, à raison d'un burst par trame sur X trames successives (dans l'exemple présenté X = 7). Chaque burst de synchronisation 60 à 66 est constitué d'une sinusoïde pure à une fréquence de voie descendante f_{2,D} à f_{8,D} choisie selon la loi de sauts de fréquence ;
- étape 32 : la station mobile bimode MMS reçoit les X bursts de synchronisation 60 à 66, grâce auxquels elle se synchronise temporellement (double synchronisation : trame et intervalle de temps) par rapport à la station de base domestique DBS.

La phase de veille (40), effectuée si la phase de synchronisation (30) s'est déroulée correctement, comprend les étapes suivantes :
- étape 41 : la station de base domestique DBS émet :
   * toutes les N trames, un burst de contrôle de synchronisation 71, 73 constitué d'une sinusoïde pure à une fréquence de voie descendante f_{9,D}, f_{10,D} choisie selon la loi de sauts de fréquence ;
   * lors d'un appel entrant, un message de paging comprenant quatre bursts 90 à 93, émis à raison d'un burst par trame sur quatre trames successives. Chaque burst 90 à 93 du message de paging est par exemple structuré comme un burst classique GSM et émis sur une fréquence de voie descendante f_{y,D} à f_{y+3,D} choisie selon la loi de sauts de fréquence ;
- étape 42 : la station mobile bimode MMS écoute, pendant une durée légèrement supérieure à l'intervalle de temps qui lui est affecté dans chaque trame, et reçoit :
   * soit un burst de contrôle de synchronisation 71, 73 émis par la station de base domestique DBS ;
   * soit un des quatre bursts 90 à 93 d'un message de paging émis par la station de base domestique DBS ;
   * soit du bruit;
- étape 43 : station mobile bimode MMS émet :
   * toutes les N trames, un burst de contrôle de synchronisation 70, 72 constitué d'une sinusoïde pure à une fréquence de voie montante f_{9,M}, f_{10,M} choisie selon la loi de sauts de fréquence ;
   * lors d'un appel sortant, un burst 80 de type RACH (demande d'établissement d'appel), par exemple structuré comme un burst classique GSM et émis sur une fréquence de voie montante f_{x,M} choisie selon la loi de sauts de fréquence ;
- étape 44 : la station de base domestique DBS écoute, pendant une durée légèrement supérieure à l'intervalle de temps qui lui est affecté dans chaque trame, et reçoit :
   * soit un burst de contrôle de synchronisation 70, 72 émis par la station mobile bimode MMS ;
   * soit un burst 80 de type RACH émis par la station mobile bimode MMS ;
   * soit du bruit.

Suite à l'initialisation d'un appel (entrant ou sortant), les étapes suivantes peuvent être identiques à celles mises en oeuvre dans le GSM, excepté le fait que les bursts successifs de n'importe quel message sont échangés avec des fréquences déterminés par la loi de sauts de fréquences prédéterminée (utilisée lors de la procédure d'enregistrement telle que proposée par la présente invention).

Dans cet exemple, au cours de la phase de veille (40), la station mobile bimode MMS et la station de base domestique DBS émettent chacune toutes les N trames, de façon à maintenir une synchronisation mutuelle. On peut également prévoir que les deux stations MMS et DBS émettent avec un décalage de N/2 trames.

Dans le cas d'un fonctionnement avec plusieurs stations mobiles bimode MMS, si une station mobile bimode est déjà enregistrée, la station de base domestique DBS fonctionne avec cette station mobile bimode sur un des intervalles de temps de chaque trame. Cependant, la station de base domestique DBS reste en mode réception (sur la fréquence de départ) pour tous les intervalles de temps restant de chaque trame.

## Revendications

1. Procédé d'enregistrement d'au moins une station mobile bimode (MSS) auprès d'une station de base domestique associée (DBS), ladite station de base domestique (DBS) étant reliée au réseau téléphonique public (RTC, RNIS) et utilisant en émission et en réception des fréquences proches ou identiques à celles d'un système de radiocommunication cellulaire, ladite station mobile bimode (MSS) pouvant fonctionner soit dans un mode "sans fil", soit dans un mode "cellulaire",
ledit procédé consistant en un échange de signaux selon un protocole prédéterminé basé sur, d'une part, une loi de sauts de fréquence prédéterminée, permettant de déterminer sur quelle fréquence doit être émis chaque signal, et, d'autre part, une fréquence de départ de voie montante prédéterminée (f_{1,M}), sur laquelle la station mobile bimode émet le premier signal, ladite loi de sauts de fréquence et ladite fréquence de départ de voie montante étant spécifiques à, et connues de, la station mobile bimode et la station de base domestique associée, **caractérisé en ce qu'**il comprend :
- une phase de contact initial (20) comprenant elle-même les étapes suivantes :
- la station mobile bimode (MSS) émet un burst de contact (50), constitué d'une sinusoïde pure à ladite fréquence de départ de voie montante (f_{1,M});
- la station de base domestique, qui est en mode réception sur ladite fréquence de départ de voie montante (f_{1,M}), reçoit le burst de contact (50), puis répond en émettant un burst d'accusé de réception (51), constitué d'une sinusoïde pure à une fréquence de départ de voie descendante ((f_{1,D}) associée à ladite fréquence de départ de voie montante (f_{1,M}) ;
- la station mobile bimode reçoit le burst d'accusé de réception (51) ; et
- une phase de synchronisation temporelle entre la station mobile bimode et la station de base domestique.

2. Procédé selon la revendication 1, **caractérisé en ce que** la station mobile bimode (MSS) émet le premier signal à la fréquence de départ de voie montante (f_{1,M}) après que l'utilisateur a indiqué qu'il souhaitait l'enregistrement de la station mobile bimode (MSS) auprès de la station de base domestique (DBS).

3. Procédé selon l'une quelconque des revendications 1 et 2, **caractérisé en ce que** la station de base domestique (DBS) est indépendante du système de radiocommunication cellulaire, la station mobile bimode (MSS) étant accessible :
- dans le mode "sans fil", par un premier numéro associé à la station de base domestique dans le réseau téléphonique public, et
- dans le mode "cellulaire", par un second numéro, qui est distinct dudit premier numéro et associé, dans le système de radiocommunication cellulaire, à un module d'identification d'abonné inséré dans la station mobile bimode.

4. Procédé selon l'une quelconque des revendications 1 à 3, **caractérisé en ce que** les fréquences émises par la station mobile bimode (MSS) et la station de base domestique (DBS) selon ladite loi de sauts de fréquences prédéterminée sont des fréquences également utilisées par la station mobile bimode et les stations de base du système cellulaire dans le mode "cellulaire",
et **en ce que** chaque fréquence émise par la station mobile bimode (MSS), dite fréquence de voie montante, est associée à une fréquence émise par la station de base domestique (DBS), dite fréquence de voie descendante, de façon à constituer un des canaux bidirectionnels utilisés par la station mobile bimode et la station de base domestique selon ladite loi de sauts de fréquence prédéterminée.

5. Procédé selon l'une quelconque des revendications 1 à 4, **caractérisé en ce que** ladite loi de sauts de fréquences prédéterminée appartient au groupe comprenant :
- les lois de sauts classiquement utilisées en radiocommunication cellulaire ;
- les lois de sauts pseudo-aléatoires ;
- les lois de sauts minimisant la probabilité d'interférence entre système sans fil et système cellulaire.

6. Procédé selon l'une quelconque des revendications 1 à 5, du type concernant au moins deux stations mobiles bimode (MSS) associées à ladite station de base domestique (DBS), **caractérisé en ce que** la station de base domestique et toutes les stations mobiles bimode utilisent une même fréquence de départ de voie montante prédéterminée,
et **en ce que** chaque couple distinct (station de base domestique, station mobile bimode) utilise une loi de sauts de fréquence prédéterminée distincte.

7. Procédé selon l'une quelconque des revendications 1 à 6, ledit système de radiocommunication étant du type à accès multiple à répartition dans le temps (AMRT), les signaux échangés étant structurés en trames successives contenant chacune un nombre prédéterminé d'intervalles de temps,
**caractérisé en ce que** ladite structure en trame est conservée, chaque station mobile bimode se voyant affecter un rang particulier d'intervalle de temps dans chaque trame.

8. Procédé selon l'une quelconque des revendications 1 à 7, **caractérisé en ce qu'**il comprend les phases successives suivantes :
- une phase de contact initial (20), au cours de laquelle la station de base domestique (DBS) et la station mobile bimode (MMS) s'assurent qu'elles peuvent se joindre ;
- une phase de synchronisation temporelle (30), au cours de laquelle la station mobile bimode (MMS) se synchronise temporellement par rapport à la station de base domestique (DBS) ;
- une phase de veille (40), au cours de laquelle :
* la station de base domestique (DBS) et la station mobile bimode (MMS) s'assurent que leur synchronisation temporelle mutuelle est conservée ;
* lors d'un appel sortant, la station mobile bimode (MMS) émet vers la station de base domestique (DBS) un signal d'accès en vue d'établir un appel ;
* lors d'un appel entrant, la station de base domestique (DBS) émet vers la station mobile bimode (MMS) un message de paging en vue d'établir un appel.

## Patentansprüche

1. Verfahren zur Registrierung von mindestens einem tragbaren Dualmode-Telefongerät (MMS) bei einer zugehörigen schnurlosen Basisstation (DBS), wobei die schnurlose Basisstation (DBS) mit dem öffentlichen Telefonnetz (Selbstwählfemsprechrtetz, ISND) verbunden ist und beim Senden und beim Empfangen Frequenzen in der Nähe oder identisch mit denen eines Mobilfunksystems nutzt, wobei das tragbare Dualmode-Telefongerät (MMS) entweder im "schnurlosen" Modus oder im "Mobilfunk"-Modus betrieben werden kann ; wobei das Verfahren aus einem Austausch von Signalen nach einem zuvor festgelegten Protokoll besteht, das einerseits auf einem zuvor festgelegten Frequenzsprunggesetz basiert, mit dem bestimmt werden kann, auf welcher Frequenz jedes Signal gesendet werden muss, und andererseits einer zuvor festgelegten Uplink-Anfangsfrequenz (f_{1,M}), auf der das tragbare Dualmode-Telefongerät das erste Signal sendet, wobei das Frequenzsprunggesetz und die Uplink-Anfangsfrequenz spezifisch für das tragbare Dualmode-Telefongerät und die zugehörige schnurlose Basisstation ist und diesen bekannt sind, **dadurch gekennzeichnet, dass** es umfasst:
- eine Anfangskontaktphase (20), welche ihrerseits die folgenden Schritte umfasst:
• das tragbare Dualmode-Telefongerät (MSS) sendet einen Kontakt-Burst (50), bestehend aus einer reinen Sinuswelle, auf der Uplink-Anfangsfrequenz (f_{1,M});
• die schnurlose Basisstation, die sich im Empfangsbetrieb auf der Uplink-Anfangsfrequenz (f_{1,M}) befindet, empfängt den Kontakt-Burst (50), antwortet anschließend durch das Senden eines Empfangsbestätigungs-Burst (51), der aus einer reinen Sinuswelle mit einer Downlink-Anfangsfrequenz (f_{1,D}) besteht, die der Uplink-Anfangsfrequenz (f_{1,M}) zugeordnet ist;
• das tragbare Dualmode-Telefongerät ernpfängt den Empfangsbestätigungs-Burst (51); und
- eine Zeitsynctironisatiorisphase zwischen dem tragbaren Dualmode-Telefongerät und der schnrlosen Basisstation.

2. Verfahren nach Anspruch 1, **dadurch gekennzeichnet, dass** das tragbare Dualmade-Telefongerät (MSS) das erste Signal auf der Uplink-Anfangsfrequenz (f1,M) sendet, nachdem der Benutzer angezeigt hat, dass er die Registrierung des tragbaren Dualmode-Telefongerätes (MSS) bei der schnurlosen Basisstation (DBS) wünscht.

3. Verfahren nach einem der Ansprüche 1 und 2, **dadurch gekennzeichnet, dass** die schnurlose Basisstation (DBS) unabhängig vom Mobilfunksystem ist, wobei der Zugang zu dem tragbaren Dualmode-Telefongerät (MSS) möglich ist:
- im "schnurlosen" Modus über eine erste der schnurlosen Basisstation im öffentlichen Telefonnetz zugeordneten Nummer; und
- im "Mobilfunk"-Modus über eine zweite Nummer, die sich von der ersten Nummer unterscheidet und die im Mobilfunksystem einem Teilnehmererkennungsmodul zugeordnet ist, das in das tragbare Dualmode-Telefongerät gesteckt wird.

4. Verfahren nach einem der Ansprüche 1 bis 3, **dadurch gekennzeichnet, dass** es sich bei den von dem tragbaren Dualmode-Telefongerät (MSS) und der schnurlosen Basisstation (DBS) nach dem festgelegten Frequenzsprunggesetz gesendeten Frequenzen um Frequenzen handelt, die von dem tragbaren Dualmode-Telefongerät und den Basisstationen des Mobilfunksystems auch im "Mobilfunk"-Modus genutzt werden,
und **dadurch**, dass jede von dem tragbaren Dualmode-Telefangerät (MSS) gesendete Frequenz, die als Uplink-Frequenz bezeichnet wird, einer von der schnurlosen Basisstation (DBS) gesendeten Frequenz, genannte Downlink-Frequenz, zugeordnet ist, sodass sie bidirektionale Kanäle bilden, die von dem tragbaren Duatmode-Teiefongerät und der schnurlosen Basisstation nach dem festgelegten Frequenzsprunggesetz genutzt werden.

5. Verfahren nach einem der Ansprüche 1 bis 4, **dadurch gekennzeichnet, dass** das zuvor festgelegte Frequenzsprunggesetz zu der Gruppe gehört, umfassend:
- die klassischen im Mobilfunk genutzten Sprunggesetze;
- die pseudozufälligen Sprunggesetze;
- die Sprunggeseize, welche die Wahrscheinlichkeit von Interferenzen zwischen dem Mobilfunksystem und dem schnurlosen System minimieren.

6. Verfahren nach einem der Ansprüche 1 bis 5 des Typs, der mindestens zwei tragbare Dualmode-Telefongeräte (MSS) betrifft, die der schnurlosen Basisstation (DBS) zugeordnet sind, **dadurch gekennzeichnet, dass** die schnurlose Basisstation und alle tragbaren Dualrnode-Telefongeräte dieselbe zuvor festgelegte Uplink-Anfangsfrequenz nutzen
und **dadurch**, dass jedes verschiedene Paar (aus schnurloser Basisstation und tragbarem Dualmode-Telefongerät) ein unterschiedliches zuvor festgelegtes Frequenzsprunggesetz nutzt.

7. Verfahren nach einem der Ansprüche 1 bis 6, wobei das Funkkommunikationssystem ein System mit Mehrfachzugriff im Zeitmultiplex (TDMA) ist, bei dem die ausgetauschten Signale in aufeinander folgenden Rahmen ("Frames") strukturiert sind, die jeweils eine festgelegte Anzahl von Zeitintervallen enthalten,
**dadurch gekennzeichnet, dass** diese Rahmenstruktur beibehalten wird, wobei jedem tragbaren Dualmode-Telefongerät ein bestimmter Zeitintervallrang in jedem Rahmen zugewiesen wird.

8. Verfahren nach einem der Ansprüche 1 bis 7, **dadurch gekennzeichnet, dass** es die folgenden aufeinander folgenden Phasen umfasst:
- eine Anfangskontaktphase (20), während der die schnurlose Basisstation (DBS) und das tragbare Dualmode-Telefongerät (MMS) sich versichern, dass sie zueinander eine Verbindung herstellen können;
- eine Zeitsynchronisationsphase (30), während der das tragbare Dualmode-Telefongerät (MMS) sich zeitlich mit der schnurlosen Basisstation (DBS) synchronisiert;
- eine Bereitschaftsphase (40), während der:
• die schnurlose Basisstation (DBS) und das tragbare Dualmode-Telefongerät (MMS) sich versichern, dass ihre gegenseitige Zeitsynchronisation erhalten bleibt;
• bei einem abgehenden Anruf das tragbare Dualmode-Telefongerät (MMS) zu der schnurlosen Basisstation (DBS) ein Zugriffssignal sendet, um einen Anruf aufzubauen;
• bei einem ankommenden Anruf die schnurlose Basisstation (DBS) an das tragbare Dualmode-Telefongerät (MMS) eine Paging-Meldung sendet, um einen Anruf aufzubauen.

## Claims

1. A registration method used for registering at least one dual mode mobile station (MMS) with an associated private base station (DBS), said private base station (DBS) being connected to the public telephone network (PSTN, ISDN) and using, for transmission and reception, frequencies which are close to or identical to those used in a cellular radio system, said dual mode mobile station (MMS) being able to operate either in "cordless" mode, or in "cellular" mode, said method consisting in interchanging signals in accordance with a preset protocol based firstly on a preset frequency hopping law, determining the frequency over which each signal is to be transmitted, and secondly on a preset uplink start-up frequency (f_{1,M}), over which the dual mode mobile station transmits the first signal, said frequency hopping law and said uplink start-up frequency being specific to, and known by, the dual mode mobile station and associated private base station, said method being **characterized in that** it comprises:
- an initial contact stage (20) itself including the following steps:
• the dual mode mobile station (MSS) transmits a contact burst (50), made up of a pure sine wave at said uplink start-up frequency (f_{1,M});
• the private base station, which is in receive mode over said uplink start-up frequency (f1,M), receives the contact burst (50), and then answers by transmitting an acknowledgment burst (51), made up of a pure sine wave at a downlink start-up frequency (f1,D) associated with said uplink start-up frequency (f1,M); and
• the dual mode mobile station receives the acknowledgment burst (51); and
- a time synchronization stage for synchronizing time between the dual mode mobile station and the private base station.

2. A method according to claim 1, **characterized in that**, the dual mode mobile station (MMS) transmits the first signal at the uplink start-up frequency (f1,M) after the user has indicated a desire to register the dual mode mobile station (MMS) with the private base station (DBS).

3. A method according to any of claims 1 and 2, **characterized in that**, the private base station (DBS) is independent from the cellular radio system, the dual mode mobile station (MMS) being accessible:
- in "cordless" mode, by means of a first number associated with the private base station within the public telephone network, and
- in "cellular" mode, by means of a second number, that is distinct from said first number and that is associated, in the cellular radio system, with a subscriber identification module inserted in the dual mode mobile station.

4. A method according to any of claims 1 to 3, **characterized in that**, the frequencies transmitted by the dual mode mobile station (MMS) and by the private base station (DBS) in application of said preset frequency hopping law are frequencies that are also used in "cellular" mode by the dual mode mobile station and by base stations within the cellular system, and further **characterized in that**, each "uplink" frequency transmitted by the dual mode mobile station (MMS) is associated with a "downlink" frequency transmitted by the private base station (DBS), in order to make up one of the bothway channels used by the dual mode mobile station and the private base station in application of said preset frequency hopping law.

5. A method according to any of claims 1 to 4, **characterized in that**, said preset frequency hopping law belongs to the group containing:
- hopping laws conventionally used in cellular radio;
- pseudorandom hopping laws; and
- hopping laws minimizing the probability of interference between cellular system and cordless system.

6. A method according to any of claims 1 to 5, of the type involving at least two dual mode mobile stations (MMS) associated with said private base station (DBS), **characterized in that** the private base station and all dual mode mobile stations use the same preset uplink start-up frequency, and further **characterized in that**, each distinct pair (private base station and 5 dual mode mobile station) uses a distinct, preset frequency hopping law.

7. A method according to any of claims 1 to 6, said radio systern being of the time-division multiple access type (TDMA), with the interchanged signals being structured in successive frames, and with each frame containing a preset number of time slots, this method is **characterized in that** said frame structure is preserved, each dual mode mobile station being allocated a specific time slot rank in each frame.

8. A method according to any of claims 1 to 7, **characterized in that**, it includes the following successive stages:
- an initial contact stage (20), during which the private base station (DBS) and the dual mode mobile station (MMS) ensure that they can contact each other;
- a time synchronization stage (30), during which the dual mode mobile station (MMS) is time synchronized with the private base station (DBS);
- a standby stage (40), during which:
• the private base station (DBS) and the dual mode mobile station (MMS) ensure that their mutual time synchronization is maintained;
• during an outgoing call, the dual mode mobile station (MMS) transmits an access signal to the private base station (DBS) for the purpose of setting up a call;
• during an incoming call, the private base station (DBS) transmits a paging message to the dual mode mobile station (MMS), for the purpose of setting up a call.
